## Europäisches Patentamt
## European Patent Office
## Office européen des brevets

(11) Veröffentlichungsnummer: **0 063 215**
A2

(12) **EUROPÄISCHE PATENTANMELDUNG**

(21) Anmeldenummer: **82101154.1**

(22) Anmeldetag: **17.02.82**

(51) Int. Cl.³: **A 01 G 9/20**

(30) Priorität: **16.04.81 DE 3115355**

(43) Veröffentlichungstag der Anmeldung:
**27.10.82 Patentblatt 82/43**

(84) Benannte Vertragsstaaten:
**AT BE CH FR GB IT LI NL SE**

(71) Anmelder: **artur fischer forschung**
**Weinhalde 14 - 18**
**D-7244 Waldachtal 3 (Tumlingen)(DE)**

(72) Erfinder: **Fischer, Artur, Dr. h.c.**
**Weinhalde 34**
**D-7244 Waldachtal 3 Tumlingen(DE)**

(54) **Zusammensteckbarer, als Frühbeet zu verwendender kastenförmiger Behälter.**

(57) Die Erfindung bezieht sich auf einen zusammensteckbaren, als Frühbeet zu verwendenden kastenförmigen Behälter, der aus Seitenwandplatten und die Seitenwandplatten zusammenhaltenden Verbindungselementen sowie einer Abdeckung besteht. Zur Verbesserung der Wärmedämmung, Sonneneinstrahlung und Transport- und Aufstellbedingungen sind die Seitenwandplatten und die Abdeckung ansich bekannte, aus Gurtplatten sowie Kammern bildenden Stege bestehende Hohlkammerplatten. Ferner weisen die Verbindungselemente die Winkelzuordnung zweier zusammenstoßender Seitenwandplatten bestimmende Anschlagflächen für die Stirnseiten dieser Seitenwandplatten auf, wobei die Verbindung der Verbindungselemente mit den Seitenwandplatten über Steckstifte erfolgt, die in miteinander fluchtende Bohrungen der Verbindungselemente und Seitenwandplatten durchsteckbar und mittels in umlaufende Nuten der Steckstifte eingreifende Schlitze von Riegelteilen verriegelbar sind.

Fig.1

EP 3007

## Zusammensteckbarer, als Frühbeet zu verwendender kastenförmiger Behälter

Die Erfindung betrifft einen zusammensteckbaren, als Frühbeet zu verwendenden kastenförmigen Behälter, bestehend aus Seitenwandplatten und die Seitenwandplatten zusammenhaltenden Verbindungselementen sowie einer Abdeckung.

Für die Verwendung als Frühbeet sind Behälter bekannt, die aus einem zusammengefügten Rahmen aus Blech, Holz oder dgl. und einer transparenten Abdeckung bestehen. Als Material für die Abdeckung wird Glas, Folie oder eine aus transparentem Kunststoff bestehende Wellplatte verwendet. Derartige Frühbeete haben eine Reihe von Nachteilen. So ist bspw. die Wärmedämmung sehr gering und damit die Frostempfindlichkeit relativ hoch. Ferner ist eine Sonneneinstrahlung nur durch die transparente Abdeckung möglich, während der Rahmen eine seitliche Sonneneinstrahlung verhindert. Schließlich sind die Transport- und Aufstellbedingungen durch die kompakte Bauweise der bekannten Frühbeete sehr stark beeinträchtigt.

Der Erfindung liegt die Aufgabe zugrunde, einen zusammensteckbaren als Frühbeet zu verwendenden Behälter zu schaffen, bei dem die oben geschilderten Nachteile vermieden sind.

Erfindungsgemäß wird dies dadurch erreicht, daß die Seitenwandplatten und die Abdeckung ansich bekannte, aus Gurtplatten sowie Kammern bildenden Stege bestehende Hohlkammerplatten sind, und daß die Verbindungselemente die Winkelzuordnung zweier zusammenstoßender Seitenwandplatten bestimmende Anschlagflächen für die Stirnseiten dieser Seitenwandplatten aufweisen, wobei die Verbindung der Verbindungselemente mit den Seitenwandplatten über Steckstifte erfolgt, die in miteinander fluchtende Bohrungen der Verbindungselemente und Seitenwandplatten durchsteckbar und mittels in umlaufende Nuten der Steckstifte eingreifende Schlitze von Riegelteilen verriegelbar sind.

Durch den Einsatz der Hohlkammerplatten als Seitenwandplatten und als Abdeckung wird der kastenförmige Behälter sehr leicht und damit sowohl zerlegt als auch in zusammengebautem Zustand ohne großen Aufwand transportierbar. Die aus Polykarbonat, Polypropylen oder ähnlichen Kunststoffen bestehenden Hohlkammerplatten sind transparent, so daß sowohl durch die Seitenwandplatten als auch durch die Abdeckung eine Sonneneinstrahlung möglich ist. Die Hohlkammerplatten bestehen aus zwei Gurtplatten, die über längsverlaufende Stege miteinander verbunden sind. Dadurch ergeben sich Kammern, die eine hohe Isolationswirkung aufweisen. Das Frühbeet ist somit gegen kurzzeitig absinkende Temperatur, bspw. Nachtfröste, unempfindlich.

Der Zusammenbau des Behälters wird durch Verbindungselemente ermöglicht, die für die Stirnseiten der Seitenwandplatten deren Winkelzuordnung bestimmende Anschlagflächen aufweisen. Diese Anschlagflächen dichten gleichzeitig die gegen die Anschlagflächen auslaufenden Kammern der Hohlkammerplatten ab, so daß kein Flugstaub, Regenwasser oder dgl. in die Kammern eindringen kann. Die Verbindung der Verbindungselemente mit den Seitenwandplatten erfolgt über Steckstifte. Zu diesem Zweck werden die Verbindungselemente und die Seitenwandplatten mit fluchtenden Bohrungen versehen. Nach dem Durchstecken der einen Kopf und an der gegenüberliegenden Seite eine umlaufende Nut aufweisenden Steckstifte durch diese Bohrungen werden zur Verspannung der Verbindungselemente mit den Seitenwandplatten über die Steckstifte Riegelteile geschoben, wobei die Schlitze der Riegelteile in die umlaufende Nut der Steckstifte eingreifen.

3

EP 3007

In einer weiteren Ausgestaltung der Erfindung können die Riegelteile mit zwei gleichgerichteten Schlitzen versehen sein, deren Abstand dem der nebeneinander liegenden Bohrungen entspricht. Durch diese Gestaltung ist es möglich, mit einem Riegelteil gleichzeitig zwei Steckstifte zu verriegeln. Damit ist ein leichterer und schnellerer Zusammenbau des Behälters möglich.

In einer weiteren Ergänzung der Erfindung können die Riegelteile mit einem abstehenden Flansch versehen sein. Der abstehende Flansch dient als Griff zur besseren Handhabung der Riegelteile einerseits und zur Versteifung der Verbindung andererseits.

Für die Eckverbindungen sind die Riegelteile gemäß einer weiteren Ergänzung der Erfindung als Winkelstücke ausgebildet.

In einer weiteren Ausgestaltung der Erfindung können die Verbindungselemente mit einem rechtwinklig nach außen abstehenden Bodenflansch versehen sein, der einen Durchbruch aufweist. In den Durchbruch des Bodenflansches können Anker, Nägel oder dgl. zur Verankerung und Verbesserung der Standfestigkeit des Frühbeetes eingesetzt werden.

Schließlich kann in einer weiteren Ausgestaltung der Erfindung zumindest ein Teil der Verbindungselemente, vorzugsweise die an den Ecken angeordneten Verbindungselemente mit einer eine Lagerschale aufweisenden Lasche versehen sein, wobei der an der Abdeckung angebrachte Gelenkzapfen in die Lagerschale eingreift. Durch diese Gestaltung ist die Abdeckung mit dem Rahmen des Frühbeetes gelenkig verbunden.

EP 3007

In der Zeichnung ist ein Ausführungsbeispiel der Erfindung dargestellt. Es zeigen

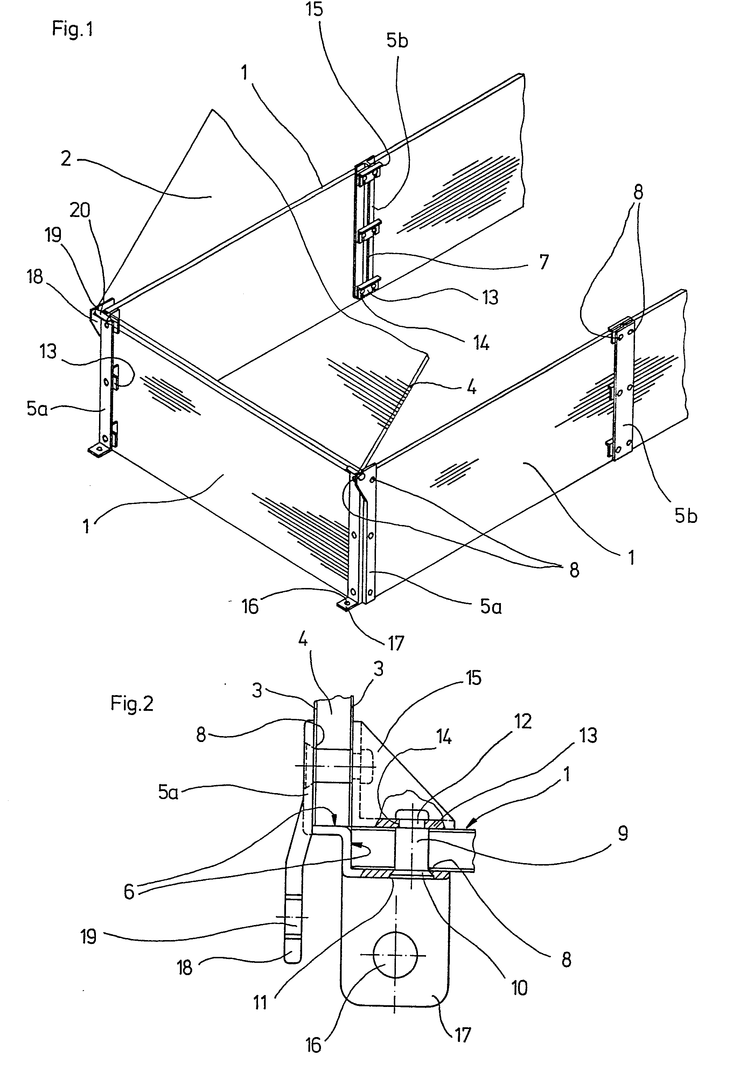

Figur 1    eine perspektivische Teilansicht des als Frühbeet zu verwendenden Behälters

Figur 2    eine Draufsicht auf die Eckverbindung.

Die bspw. aus Polykarbonat hergestellten Hohlkammerplatten bilden die Seitenwandplatten 1 und die Abdeckung 2. Die Hohlkammerplatten bestehen aus zwei Gurtplatten 3, die über längsverlaufende Stege 4 miteinander verbunden sind. Zum Zusammenstecken des Behälters sind wenigstens vier Eck-Verbindungselemente 5 a erforderlich. Um eine Verlängerung des Behälters im Additionssystem nach beiden Richtungen hin zu ermöglichen, können Zwischen-Verbindungselemente 5 b verwendet werden. Bei den Eck-Verbindungselementen 5 a sind die Anschlagflächen 6 für die Stirnseiten der Hohlkammerplatten im rechten Winkel zueinander angeordnet, während bei den Zwischen-Verbindungselementen 5 b die Anschlagflächen 6 einander gegenüber liegen und durch einen Mittelsteg 7 gebildet sind. Die Verbindungselemente 5 a, 5 b weisen wenigstens an ihren beiden Endbereichen zwei nebeneinanderliegende Bohrungen 8 auf, die sich an der anzuschliessenden Seitenwandplatte 1 fortsetzen. Durch diese Bohrungen 8 werden die Steckstifte 9 soweit durchgesteckt, bis der Kopf 10 des Steckstiftes 9 in der Bohrungsansenkung 11 der Verbindungselemente 5 a, 5 b anliegt. Das entgegengesetzte Ende der Steckstifte 9 überragt soweit die Innenseite der Hohlkammerplatte, daß die dem Kopf 10 des Steckstiftes 9 zugewandte Innenkante der umlaufenden Nut 12 des Steckstiftes 9 bündig mit der Aussenfläche der Hohlkammerplatte abschließt. Zur Verriegelung wird über zwei nebeneinanderliegende Steckstifte 9 gleichzeitig ein Riegelteil 13 aufgeschoben, wobei die Schlitze 14 des Riegelteiles 13 in die umlaufende Nut 12 der Steckstifte 9

EP 3007

eingreifen. Damit ergibt sich eine feste Verbindung zwischen den Verbindungselementen 5 a, 5 b und den Seitenwandplatten 1. Für die Zwischen-Verbindungselemente 5 b sind die Riegelteile 13 plattenförmig und für die Eck-Verbindungselemente 5 a als Winkelstücke ausgebildet. Zur besseren Handhabung der Riegelteile 13 sind diese zusätzlich mit einem rechtwinklig abstehenden Flansch 15 versehen, der einerseits als Griff für die Riegelteile und andererseits zur zusätzlichen Versteifung der Verbindung dient. Nach dem Zusammenbau des Rahmens des Behälters in der vorgeschilderten Weise kann der Rahmen durch Einschlagen von Ankern, Nägel oder dgl. (nicht dargestellt) in den Durchbruch 16 des an den Verbindungselementen 5 a, 5 b angeordneten Bodenflansches 17 zur Verbesserung der Standfestigkeit verankert werden.

Zur Anbringung der Abdeckung 2 weisen die Eck-Verbindungselemente 5 a zusätzlich eine abgekröpfte Lasche 18 auf, die mit einer Lagerschale 19 versehen ist. In diese Lagerschale 19 greift der an der Abdeckung 2 angeordnete Gelenkzapfen 20 ein. Damit ist die Abdeckung gelenkig mit dem Rahmen verbunden.

artur fischer forschung

7244 Tumlingen / Waldachtal

den 07. April 1981

Ju/Woe

- 1 -

EP 3007

P a t e n t a n s p r ü c h e

1. Zusammensteckbarer, als Frühbeet zu verwendender kastenförmiger Behälter, bestehend aus Seitenwandplatten und die Seitenwandplatten zusammenhaltenden Verbindungselementen sowie einer Abdeckung, dadurch gekennzeichnet, daß die Seitenwandplatten und die Abdeckung ansich bekannte, aus Gurtplatten sowie Kammern bildenden Stege bestehende Hohlkammerplatten sind, und daß die Verbindungselemente die Winkelzuordnung zweier zusammenstoßender Seitenwandplatten bestimmende Anschlagflächen für die Stirnseiten dieser Seitenwandplatten aufweisen, wobei die Verbindung der Verbindungselemente mit den Seitenwandplatten über Steckstifte erfolgt, die in miteinander fluchtende Bohrungen der Verbindungselemente und Seitenwandplatten durchsteckbar und mittels in umlaufende Nuten der Steckstifte eingreifende Schlitze von Riegelteilen verriegelbar sind.

EP 3007

2. Zusammensteckbarer Behälter nach Anspruch 1, dadurch gekennzeichnet, daß die Riegelteile mit zwei gleichgerichteten Schlitzen versehen sind, deren Abstand dem der nebeneinander liegenden Bohrungen entspricht.

3. Zusammensteckbarer Behälter nach Anspruch 1, dadurch gekennzeichnet, daß die Riegelteile mit einem abstehenden Flansch versehen sind.

4. Zusammensteckbarer Behälter nach Anspruch 1, dadurch gekennzeichnet, daß die Riegelteile als Winkelstücke ausgebildet sind.

5. Zusammensteckbarer Behälter nach Anspruch 1, dadurch gekennzeichnet, daß die Verbindungselemente mit einem rechtwinklig nach außen abstehenden Bodenflansch versehen sind, der einen Durchbruch aufweist.

6. Zusammensteckbarer Behälter nach Anspruch 1, dadurch gekennzeichnet, daß zumindest ein Teil der Verbindungselemente, vorzugsweise die an den Ecken angeordneten Verbindungselemente mit einer eine Lagerschale aufweisenden Lasche versehen sind, wobei der an der Abdeckung angebrachte Gelenkzapfen in die Lagerschale eingreift.

Fig.1

Fig.2